# EUROPÄISCHE PATENTSCHRIFT

(11) **EP 1 706 719 B1**
(45) Veröffentlichungstag und Bekanntmachung des Hinweises auf die Patenterteilung: **19.03.2008**
(21) Anmeldenummer: 04705014.1
(22) Anmeldetag: 24.01.2004
(51) Int. Cl.: G01M 15/00, G01J 5/00, G01J 5/08, F02B 77/08

(54) **OPTISCHER SENSOR**
OPTICAL SENSOR
CAPTEUR OPTIQUE

(43) Veröffentlichungstag der Anmeldung: 04.10.2006
(73) Patentinhaber: Kistler Holding AG, 8408 Winterthur (CH)
(72) Erfinder: SONDEREGGER, Christof, CH-8413 Neftenbach (CH); VOLLENWEIDER, Kurt, CH-8457 Humlikon (CH); BERTHOLDS, Axel, CH-6653 Verscio (CH); BRAUNSCHWEILER, Andreas, CH-6605 Locarno Monti (CH)
(86) Internationale Anmeldenummer: PCT/IB2004/000796
(87) Internationale Veröffentlichungsnummer: WO 2005/080938

(56) Entgegenhaltungen:
- EP-A- 0 385 321
- US-A- 4 753 224
- US-A1- 2002 027 723
- US-A1- 2002 134 138
- US-B1- 6 320 184

## Beschreibung

Die Erfindung betrifft einen optischen Sensor zum Erfassen von Verbrennungsvorgängen in einem Brennraum und ein Verfahren zur Herstellung eines solchen Sensors.

Optische Sensoren dienen in Verbrennungsmotoren, beispielsweise in Ottomotoren oder Dieselmotoren, der Beobachtung der Verbrennung. Die zeitliche Aufnahme der Helligkeit in einem Brennraum liefert einerseits wichtige Daten als Randbedingungen für Computermodelle, da auf Grund der Helligkeit auf die Temperatur geschlossen werden kann. Andererseits kann bei der Ermittlung der Helligkeit auf die Russ-Konzentration im Brennraum geschlossen werden. Aufgrund immer schärferer Vorschriften der Abgas Gesetzgebung werden grosse Anstrengungen unternommen, die Russ Bildung bei der Verbrennung in Motoren zu verringern. Optische Sensoren liefern für diese Entwicklungen wertvolle Daten.

So werden beispielsweise, wie in der EP 0593413 beschrieben, eine Vielzahl von optischen Sensoren in der Zylinderkopfdichtung einer Brennkraftmaschine angeordnet. Der Durchmesser solcher Sensoren darf für diesen Zweck in der Regel nicht grösser als etwa 2 mm sein. Der Erfassungswinkel von Sensoren dieser Anwendung liegt bei 10 bis 40°.

Für diesen Anwendungsbereich sind eine Vielzahl von Sensoren im Brennraum vorgesehen, um die räumliche Ausdehnung der Verbrennung erfassen zu können. In diesem Fall wird ein entsprechend kleinerer Erfassungswinkel vorgesehen.

Andere Anwendungsbereiche sehen einen einzigen Sensor vor, der möglicht viel des im Brennraum emittierten Lichtes erfassen soll. Von einem solchen Sensor wird ein grosser Erfassungswinkel gefordert. Dafür verwendete Sensoren weisen einen Erfassungswinkel von etwa 110° auf. Der Durchmesser solcher Sensoren liegt bei über 10 mm. Daher lassen sich solche Sensoren nicht in eine Zündkerze oder Glühkerze einbauen.

Solche Sensoren werden beispielsweise direkt in den Zylinderkopf in dafür angebrachte Öffnungen eingebaut. Schwierigkeiten entstehen beim Einbauen und Abdichten der entstandenen Öffnungen.

Eine andere Möglichkeit besteht darin, einen optischen Sensor in eine Zündkerze eines Ottomotors oder in eine Glühkerze eines Dieselmotors einzubauen. Dies geschieht beispielsweise mittels eines am Sensor angebrachten Gewindes. Dies hat den Vorteil eines schnellen Ein- und Ausbaus und bedarf keine zusätzlichen mechanischen Arbeiten am Motor.

Es stellt sich somit die Aufgabe der vorliegenden Erfindung, einen optischen Sensor anzugeben, der einen Erfassungswinkel von mindestens 130° aufweist und dessen Querschnitt nicht grösser als 10 mm, vorzugsweise kleiner als 6.5 mm, insbesondere 2.5 bis 3.5 mm ist.

Optische Sensoren bestehen üblicherweise aus einer Linse, die das Licht, das von einer Seite auftritt, durchlässt und auf der gegenüberliegenden Seite wieder austreten lässt. Anschliessend trifft das Licht auf einen Lichtleiter, der das Licht zu einem Erfassungsgerät weiterleitet. An diesem Erfassungsgerät wird das Lichtsignal zu Daten verarbeitet und in eine Form aufbereitet, die eine weitere Auswertung der Informationen ermöglicht.

Die Linse sowie ein Ende des Lichtleiters werden in der Regel von einer Hülse umgeben und zusammengehalten. Die Schwierigkeit der Zentrierung stellt sich vor allem bei sehr kleinen Durchmessern und Tiefen der Linsen.

Es stellt sich somit die Aufgabe der vorliegenden Erfindung, ein Verfahren anzugeben, mit dem eine Linse eines optischen Sensors mit höchster Präzision zentriert werden kann.

Die Aufgabe wird gelöst durch die kennzeichnenden Teile der unabhängigen Patentansprüche

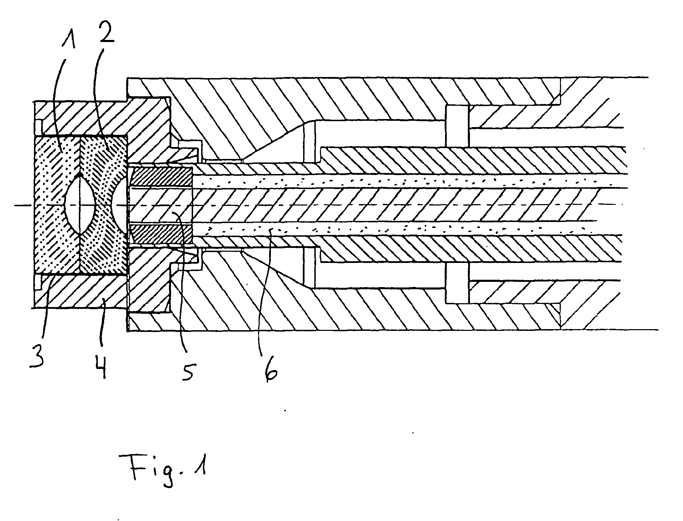

Die Erfindung wird unter Verwendung der folgenden Zeichnung erläutert. Es zeigt
- Fig. 1: eine erfindungsgemässe Ausführungsform eines optischen Sensors

Fig.1 zeigt die Spitze eine optischen Sensors. In diesem Ausführungsbeispiel wird ein Linsensystem, bestehend aus zwei Linsen 1, 2, dargestellt. Die eine Linse 1 ist eine Plankonkave Linse, wobei die plane Fläche dem Brennraum zugewandt ist. Die zweite Linse 2 ist eine doppelkonkave Linse und unmittelbar hinter der ersten Linse 1 angeordnet. Beide Linsen sind in einer Hülse 4 untergebracht. Ein Lichtleiter 5 ragt mit einem Ende ebenfalls in die Hülse 4. Der Lichtleiter 5 ist ebenfalls sehr präzise positioniert. Durch den Lichtleiter 5 wird das erfasste Licht geleitet und gelangt schliesslich in eine dafür geeignetes Erfassungsgerät, das das Licht zu einem Signal aufbereitet und für weitere Zwecke auswertet. Ein solcher Sensor lässt sich, beispielsweise mittels eines am Sensor angebrachten Gewindes, in eine Zündkerze oder Glühkerze einbauen.

Das Linsensystem 1, 2 gewährt einen Strahlengang, der einen Erfassungswinkel von 110° bis 140° aufweist. Insbesondere erweisen sich Linsensysteme von 130 bis 135° für diese Zwecke sehr gut.

Die verwendeten Linsen 1, 2 bestehen aus einem Material, das einen thermischen Expansionskoeffizienten bei 0 bis 400 °C von weniger als 10.5·10⁻⁶ K⁻¹, insbesondere zwischen 0.15·10⁻⁶ K⁻¹ und 6.7·10⁻⁶ K⁻¹ aufweist. Die Mantelfläche mindestens der Linse 1 muss lötbar sein oder lötbar ausgestaltet sein, beispielsweise durch eine Metallisierung. Beide Linsen 1, 2 sollen Lichtwellen bis zu 10 µm, mindestens im Bereich 0.2 bis 2 µm durchlassen. Als geeignet haben sich beispielsweise Saphir und Quarzglas erwiesen. Der Lichtleiter 5 endet unmittelbar in vordefiniertem Abstand zur Linse 2 und ist im Bereich der Hülse 4 gefasst. Im hinteren Bereich des Sensors wird der Lichtleiter 6 mit einer geeigneten Masse 6 in den Sensor eingegossen.

Interessant an diesem Linsensystem 1, 2 ist die Möglichkeit, kleine Linsen 1, 2 und somit kleine Sensoren herstellen zu können. Solche Sensoren sollen in eine Zündkerze oder in eine Glühkerze eingebaut werden können. Daher ist es wünschenswert, Linsensysteme 1, 2 von einem Durchmesser von < 8 mm, vorzugsweise < 5 mm, insbesondere < 2.4 mm herzustellen. Dadurch wird der Aussendurchmesser der Hülse 4 < 10 mm, vorzugsweise < 6.5 mm, insbesondere 2.5 bis 3.5 mm.

Die vom Licht zu durchtretene Länge des Linsensystems 1, 2 ist in der Regel höchstens so gross ist wie der Durchmesser des Linsensystems 1, 2, vorzugsweise 50 bis 75 % des Durchmessers des Linsensystems 1, 2.

In die Aussparung der Hülse 4 müssen die Linsen 1, 2 mit hoher Präzision zentriert eingebracht und befestigt sein. Der Lichtleiter muss in genau vordefiniertem Abstand der Linse angebracht sein. Die Präzision ist um so erforderlicher, je kleiner der Durchmesser der Linsen 1, 2 sind. Bereits eine geringe Abweichung der zentrierten Lage verschlechtert das Signal bis zur Unbrauchbarkeit. Das hier angegebene erfinderische Verfahren ermöglicht diese erforderliche präzise Zentrierung.

Die Linsen 1, 2 haben gegenüber der Aussparung der Hülse 4, in der sie eingelagert sind, ein Spiel von 5 bis 10 µm. Die Hülse besteht aus einem Material, das einen thermischen Expansionskoeffizient im Bereich von 0 bis 400 °C von weniger als 10.5·10⁻⁶ K⁻¹, insbesondere von weniger als 7·10⁻⁶ K⁻¹ aufweist. Zudem muss das Materiel der Hülse 4 lötbar sein und andauernde Temperaturen bis 600 °C und kurzzeitige Temperaturen bis 950 °C aushalten können. Die Hülse 4 muss eine Temperaturwechselfestigkeit von etwa 50 K/10 ms aufweisen. Die Wärmeleitfähigkeit des Materials der Hülse 4 sollte mindestens 20 W/mK, vorzugsweise mindestens 50 W/mK sein. Das Material der Hülse 4 muss mechanisch bearbeitbar sein mit einer Genauigkeit von ± 10 µm, vorzugsweise ± 5 µm.

Das Verfahren der Zentrierung der Linsen 1, 2 in der Aussparung der Hülse 4 besteht darin, den durch das Spiel 3 entstandene Spalt 3 zwischen der ersten Linse 1 und der Hülse 4, gegebenenfalls auch den Spalt zwischen der Linse 2 und der Hülse 4 mit einer Lötmasse zu füllen. Die Lötmasse soll einen oberen Schmelzpunkt von 770 bis 1100 °C aufweisen und eine gute Benetzbarkeit aufweisen.

Die axiale Ausrichtung von Lichteiter 5 und Linsensystem 1, 2 soll ebenfalls sehr präzise sein mit einer Abweichung kleiner als 10 µm, vorzugsweise kleiner als 5 µm. Dies wird erreicht, indem die Hülse tiefgezogen wird.

## Patentansprüche

1. Optischer Sensor zum Erfassen von Verbrennungsvorgängen in einem Brennraum, mindestens bestehend aus einem dem Brennraum zugewandten Linsensystem (1, 2), einem Lichtleiter (5) und einer das Linsensystem und ein Ende des Lichtleiters umgebene Hülse (4), **dadurch gekennzeichnet, dass** das Linsensystem (1, 2) aus mindestens einer im wesentlichen plankonkaven Linse (1) und einer doppelkonkaven Linse (2) besteht, wobei die plane Seite der plankonkaven Linse (1) dem Brennraum ausgesetzt ist.

2. Sensor gemäss Anspruch 1, **dadurch gekennzeichnet, dass** der Erfassungswinkel des Linsensystems (1, 2) mindestens 130°, vorzugsweise mindestens 135° insbesondere bis 140° aufweist.

3. Sensor gemäss Anspruch 1, **dadurch gekennzeichnet, dass** die Linsen (1, 2) aus Saphir oder Quarzglas bestehen.

4. Sensor gemäss Anspruch 1, **dadurch gekennzeichnet, dass** mindestens die plankonkave Linse (1) an ihrer Mantelfläche mit einer Metallisierung umgeben ist.

5. Sensor gemäss Anspruch 4, **dadurch gekennzeichnet, dass** die plankonkave Linse (1) mit einem Lotmaterial an der Hülse (4) befestigt ist.

6. Sensor gemäss Anspruch 1, **dadurch gekennzeichnet, dass** das Linsensystem (1, 2) einen maximalen Durchmesser von < 8 mm, vorzugsweise von < 5 mm, insbesondere von < 2.4 mm aufweist.

7. Sensor gemäss Anspruch 1, **dadurch gekennzeichnet, dass** die vom Licht zu durchtretene Länge des Linsensystem (1, 2) höchstens so gross ist wie der Durchmesser, vorzugsweise zwischen 50 und 75 % des Durchmessers des Linsensystem (1, 2) beträgt.

8. Sensor gemäss Anspruch 1, **dadurch gekennzeichnet, dass** der Aussendurchmesser der Hülse (4) höchstens 10 mm, vorzugsweise höchstens 6.5 mm, insbesondere etwa 3.5 mm aufweist.

9. Sensor gemäss Anspruch 1, **dadurch gekennzeichnet, dass** der Sensor in eine Zündkerze oder in eine Glühkerze eingebaut werden kann.

10. Sensor gemäss Anspruch 1, **dadurch gekennzeichnet, dass** das Spiel (3) zwischen dem Aussenradius der Linsen (1, 2) und dem Innenradius der Hülse (4) kleiner als 10 µm, vorzugsweise etwa 5 µm ist.

11. Sensor gemäss Anspruch 3, **dadurch gekennzeichnet, dass** mindestens die dem Brennraum zugewandte Linse (1) mit einem Lotmaterial an der Hülse (4) im Bereich des Spaltes (3) befestigt ist.

12. Sensor gemäss Anspruch 1, **dadurch gekennzeichnet, dass** die Hülse (4) aus einem Material besteht, das eine anhaltende Temperaturbelastung von 600 °C und eine kurzzeitige Temperaturbelastung von 950 °C aushält.

13. Sensor gemäss Anspruch 1, **dadurch gekennzeichnet, dass** die Hülse (4) aus einem Material besteht, das einen thermischen Expansionskoeffizienten im Bereich von 0 bis 400 °C von weniger als 10.5·10⁻⁶ K⁻¹, insbesondere von weniger als 7·10⁻⁶ K⁻¹ aufweist.

14. Verfahren zum Zentrieren von einer oder mehreren Linsen (1, 2) und eines Lichtleiters (5) in einer Hülse (4) eines optischen Sensors gemäss Anspruch 1 zum Erfassen von Verbrennungsvorgängen in einem Brennraum, **dadurch gekennzeichnet, dass** der Spalt (3) zwischen dem Aussenradius der Linsen (1, 2) und dem Innenradius der Hülse (4) kleiner als 10 µm, vorzugsweise etwa 5 µm ist und dass der Spalt (3) mit einer Lötmasse ausgefüllt wird und dass die Abweichung der axialen Ausrichtung von Lichteiter (5) und Linsensystem (1, 2) weniger als 10 µm, vorzugsweise weniger als 5 µm ist.

15. Verfahren gemäss Anspruch 14, **dadurch gekennzeichnet, dass** eine tiefgezogene Hülse (4) verwendet wird.

16. Verfahren gemäss Anspruch 14 oder 15, **dadurch gekennzeichnet, dass** der Sensor ein Linsensystem (1, 2) von mindestens zwei Linsen (1, 2) umfasst.

17. Verfahren gemäss Anspruch 14, 15 oder 16, **dadurch gekennzeichnet, dass** der Sensor Merkmale gemäss einer der Ansprüche 1 bis 13 aufweist.

## Claims

1. An optical sensor for monitoring combustion processes in a combustion chamber at least consisting of a lens system (1, 2) facing the combustion chamber, a waveguide (5) and a sheath (4) surrounding the lens system and one end of the waveguide **characterized in that** the lens system (1, 2) comprises at least one essentially plano-concave lens (1) and a double concave lens (2) wherein the planar face of the plano-concave lens (1) is exposed to the combustion chamber.

2. A sensor according to claim 1 **characterized in that** the monitoring angle of the lens system (1, 2) is at least 130°, preferably at least 135°, in particular up to 140°.

3. A sensor according to claim 1 **characterized in that** the lenses (1, 2) are composed of sapphire or quartz glass.

4. A sensor according to claim 1 **characterized in that** at least the plano-concave lens (1) at its lateral surface is surrounded by a metal plating.

5. A sensor according to claim 4 **characterized in that** the plano-concave lens (1) is fixed to the sheath (4) by means of a soldering material.

6. A sensor according to claim 1 **characterized in that** the lens system (1, 2) has a maximum diameter of < 8 mm, preferably of < 5 mm, in particular of < 2.4 mm.

7. A sensor according to claim 1 **characterized in that** the length of the lens system (1, 2) which has to be passed by the light is at most equal to the diameter, preferably between 50 and 75% of the diameter of the lens system (1, 2).

8. A sensor according to claim 1 **characterized in that** the outer diameter of the sheath (4) is at most 10 mm, preferably at most 6.5 mm, in particular about 3.5 mm.

9. A sensor according to claim 1 **characterized in that** the sensor can be assembled in a spark plug or in a heater plug.

10. A sensor according to claim 1 **characterized in that** the slackness (3) between the outer radius of the lenses (1, 2) und the inner radius of the sheath (4) is less than 10 µm, preferably about 5 µm.

11. A sensor according to claim 3 **characterized in that** at least the lens (1) facing the combustion chamber is fixed by means of a soldering material to the sheath (4) in the area of the gap (3).

12. A sensor according to claim 1 **characterized in that** the sheath (4) is made of a material able to withstand a continuous temperature load of 600°C and a momentary temperature load of 950°C.

13. A sensor according to claim 1 **characterized in that** the sheath (4) is made of a material having a coefficient of thermal expansion in the range of 0 to 400°C of less than 10.5·10⁻⁶ K⁻¹, particularly of less than 7·10⁻⁶ K⁻¹.

14. A method for the centering of one or more lenses (1, 2) and a waveguide (5) in a sheath (4) of an optical sensor according to claim 1 for the monitoring of combustion processes in a combustion chamber **characterized in that** the gap (3) between the outer radius of the lenses (1, 2) and the inner radius of the sheath (4) is less than 10 µm, preferably about 5 µm, and that the gap (3) is filled with a soldering paste and that the deviation of the axial orientation of the waveguide (5) and the lens system (1, 2) is less than 10 µm, preferably less than 5 µm.

15. The method according to claim 14 **characterized in that** a deep-drawn sheath (4) is used.

16. The method according to claim 14 or 15 **characterized in that** the sensor comprises a lens system (1, 2) having at least two lenses (1, 2).

17. The method according to claim 14, 15, or 16 **characterized in that** the sensor has features according any of the claims 1 to 13.

## Revendications

1. Un senseur optique pour la surveillance des processus de combustion dans une chambre de combustion consistant d'au moins un système de lentilles (1, 2) tourné vers la chambre de combustion, d'un guide d'ondes (5), et d'une gaine (4) entourant le système de lentilles ainsi qu'une des extrémités du guide d'ondes **caractérisé en ce que** ledit système de lentilles (1, 2) comprend au moins une lentille sensiblement plano-concave (1) et une lentille double-concave (2), la face plane de la lentille plano-concave (1) étant exposée à la chambre de combustion.

2. Un senseur selon la revendication 1 **caractérisé en ce que** l'angle de surveillance du système de lentilles (1, 2) est d'au moins 130°, préférentiellement d'au moins 135°, particulièrement jusqu'à 140°.

3. Un senseur selon la revendication 1 **caractérisé en ce que** les lentilles (1, 2) sont composées du saphir ou du verre quartzeux.

4. Un senseur selon la revendication 1 **caractérisé en ce que** la lentille plano-concave (1) au moins est entourée d'une métallisation à la surface latérale de celle-ci.

5. Un senseur selon la revendication 4 **caractérisé en ce que** la lentille plano-concave (1) est fixée à la gaine (4) à l'aide d'un matériau à souder.

6. Un senseur selon la revendication 1 **caractérisé en ce que** le système de lentilles (1, 2) présente un diamètre d'au maximum < 8 mm, préférentiellement de < 5 mm, notamment de < 2,4 mm.

7. Un senseur selon la revendication 1 **caractérisé en ce que** la longueur du système de lentilles (1, 2) que la lumière doit passer est au plus égale au diamètre, préférentiellement compris entre 50 et 75% du diamètre du système de lentilles (1, 2).

8. Un senseur selon la revendication 1 **caractérisé en ce que** le diamètre externe de la gaine (4) est au plus égale à 10 mm, préférentiellement au plus égale à 6,5 mm, notamment d'environ 3,5 mm.

9. Un senseur selon la revendication 1 **caractérisé en ce que** ledit senseur est apte à être incorporé dans une bougie ou une bougie de préchauffage.

10. Un senseur selon la revendication 1 **caractérisé en ce que** le jeu (3) entre le rayon externe des lentilles (1, 2) et le rayon interne de la gaine (4) est inférieur de 10 µm, préférentiellement d'environ 5 µm.

11. Un senseur selon la revendication 3 **caractérisé en ce qu'**au moins la lentille (1) tournée vers la chambre de combustion est fixée au moyen d'un matériau à souder a la gaine (4) dans la zone de la fente (3).

12. Un senseur selon la revendication 1 **caractérisé en ce que** la gaine (4) est fabriquée d'un matériau pouvant résister à une charge de température prolongée de 600°C et à une charge de température de courte durée de 950°C.

13. Un senseur selon la revendication 1 **caractérisé en ce que** la gaine (4) est fabriquée d'un matériau avec un coefficient de dilatation thermique dans la gamme de 0 à 400°C étant inférieur de 10.5·10⁻⁶ K⁻¹, particulièrement inférieur de 7·10⁻⁶ K⁻¹.

14. Un procédé de centrage d'une ou plusieurs lentilles (1, 2) et d'un guide d'ondes (5) dans une gaine (4) d'un senseur optique selon la revendication 1 pour la surveillance des processus de combustion dans une chambre de combustion **caractérisé en ce que** la fente (3) entre le rayon externe des lentilles (1, 2) et le rayon interne de la gaine (4) est inférieur de 10 µm, préférentiellement d'environ 5 µm, et **en ce que** la fente (3) est remplie avec une masse à souder et **en ce que** l'écart d'alignement axial du guide d'ondes (5) et le système des lentilles (1, 2) est inférieur de 10 µm, préférentiellement inférieur de 5 µm.

15. Le procédé selon la revendication 14 **caractérisé en ce qu'**on utilise une gaine (4) emboutie.

16. Le procédé selon la revendication 14 ou 15 **caractérisé en ce que** ledit senseur comprend un système de lentilles (1, 2) présentant au moins deux lentilles (1, 2).

17. Le procédé selon la revendication 14, 15, ou 16 **caractérisé en ce que** ledit senseur présente des caractéristiques selon l'une des revendications 1 à 13.
